# EUROPEAN PATENT APPLICATION

(11) **EP 4 851 027 A1**
(43) Date of publication of application: **09.12.2026**
(21) Application number: 26182929.5
(22) Date of filing: 03.06.2026
(51) Int. Cl.: B62J 1/12, B62J 1/18

(54) **STRADDLED VEHICLE SEAT AND STRADDLED VEHICLE HAVING THE SAME**

(30) Priority: 03.06.2025 JP 2025092448
(71) Applicant: Yamaha Hatsudoki Kabushiki Kaisha, Iwata-shi, Shizuoka 438-8501 (JP)
(72) Inventor: HASEGAWA, Tetsuya, Iwata-shi, 4388501 (JP); HARUTA, Katsuya, Iwata-shi, 4388501 (JP); UCHIYAMA, Daisuke, Iwata-shi, 438-0026 (JP)
(74) Representative: Studio Torta S.p.A.

(57) **Abstract**

There is disclosed a straddled vehicle (6) capable of achieving both ease of weight shift of the rider in the forward direction and reduction of slipping of the rider in the rearward direction, wherein a skin layer (20) of a seat (6) of a motorcycle (1) includes a plurality of anti-slip protrusions (30) protruding from a base surface (22); in a predetermined vertical cross section of the anti-slip protrusion (30) along the front-rear direction, an average angle (θ1) formed between a front surface (35) and a base surface (22) of the anti-slip protrusion (30) being smaller than an average angle (θ2) formed between a rear surface (36) and the base surface (22) of the anti-slip protrusion (30).

## Description

### Technical field

The present invention relates to a straddled vehicle seat and a straddled vehicle having the same.

### Prior art

Straddled vehicles, such as motorcycles, have a seat on which the rider sits. The seat of a straddled vehicle typically does not have a backrest. Straddled vehicles tend to accelerate abruptly more often compared to automobiles. Therefore, on a straddled vehicle, the rider is more often susceptible to the effects of inertia during acceleration of the vehicle. Straddled vehicle seats provided with minute protrusions on their surfaces have been proposed in the art to suppress slipping of the rider on the seat surface during acceleration, for example.

For example, JP 2021-160555 A discloses a motorcycle seat with mesh-like openings formed on its surface layer. JP 2021-160555 A states that these mesh-like openings reduce slipping of the seated rider in the vehicle front-rear direction. With this, it is believed that it is therefore possible to suppress slipping of the rider on the seat in the rearward direction during acceleration.

Now, with straddled vehicles, the rider may shift weight on the seat while driving according to the state of the vehicle. For example, with off-road vehicles, such as motocrossers, the rider needs to shift weight according to the attitude of the vehicle, and such vehicles employ a seat shape that is flat in the front-rear direction so that the rider straddling the seat can easily shift weight. However, while the rider can easily shift weight on the seat, the rider tends to slip rearward when the vehicle accelerates.

### Descrpition of the invention

An object of the present invention is to provide a straddled vehicle seat capable of achieving both ease of weight shift in the forward direction and reduction of slipping in the rearward direction when the vehicle accelerates, and a straddled vehicle having the same.

A straddled vehicle seat disclosed herein is a straddled vehicle seat provided on a straddled vehicle, including a skin layer and a cushion layer arranged on a back side of the skin layer. The skin layer includes a base surface, and an anti-slip protrusion that is formed on the base surface so as to extend along a front-rear direction and that is protruding upward from the base surface. The anti-slip protrusion includes a front surface including a perpendicular surface that is perpendicular to the base surface or an inclined surface that is inclined relative to the perpendicular surface so as to extend forward and downward, and a rear surface located rearward relative to the front surface and including an inclined surface that is inclined relative to the perpendicular surface so as to extend rearward and downward. In a predetermined vertical cross section of the anti-slip protrusion along the front-rear direction, an average angle formed between the front surface and the base surface is smaller than an average angle formed between the rear surface and the base surface. Note that the front, rear, left, right, up, and down directions for the straddled vehicle seat refer to these directions of the straddled vehicle with straddled vehicle seat installed on the straddled vehicle. Front, rear, left, right, up, and down of the straddled vehicle refer to these directions as seen from a virtual rider on the straddled vehicle while the straddled vehicle is standing upright on a horizontal plane with no rider and no load thereon.

With the straddled vehicle seat described above, the skin layer includes the anti-slip protrusion protruding from the base surface. While the anti-slip protrusion includes the front surface and the rear surface, the average angle of the front surface relative to the base surface is smaller than the average angle of the rear surface relative to the base surface. Since the front surface is a perpendicular surface or an inclined surface that is steeper than the rear surface, the front surface of the anti-slip protrusion can effectively reduce slipping of the rider in the rearward direction during acceleration of the vehicle. On the other hand, since the rear surface of the anti-slip protrusion is an inclined surface that is gentler than the front surface, the rider can relatively easily shift weight in the forward direction.

The average angle formed between the front surface and the base surface may be 90 degrees or more and less than 135 degrees. The average angle formed between the rear surface and the base surface may be 135 degrees or more.

Thus, it is possible to desirably achieve both ease of weight shift of the rider in the forward direction and reduction of slipping in the rearward direction when the vehicle accelerates.

A static friction coefficient of the skin layer in a rearward direction may be greater than any of a static friction coefficient of the skin layer in a forward direction, a static friction coefficient of the skin layer in a leftward direction, and a static friction coefficient of the skin layer in a rightward direction.

Thus, it is possible to effectively reduce slipping of the rider in the rearward direction during acceleration while making it easy for the rider to shift weight forward, leftward, and rightward.

The front surface may be composed only of the inclined surface that slopes from an apex of the front surface to the base surface. The rear surface may be continuous with the apex of the front surface and composed of the inclined surface that slopes from the apex of the front surface to the base surface.

Thus, the effects described above can be realized with anti-slip protrusions of a simple shape.

A dimension of the front surface in the front-rear direction may be 0.05 to 0.25 times a dimension of the rear surface in the front-rear direction.

In any vertical cross section of the anti-slip protrusion along the front-rear direction, the average angle formed between the front surface and the base surface may be smaller than the average angle formed between the rear surface and the base surface.

The skin layer may include an upper surface portion on which the anti-slip protrusion protruding upward from the base surface is provided, and a side surface portion that is located sideward of the upper surface portion. The anti-slip protrusion may be formed extending from the upper surface portion to the side surface portion. Another anti-slip protrusion protruding sideward from the base surface may be provided on the side surface portion. The anti-slip protrusion may exhibit a wave-like shape extending from the upper surface portion to the side surface portion.

The anti-slip protrusion may include a plurality of protrusions that are spaced apart from each other in the front-rear direction.

The anti-slip protrusion may include: a plurality of first protrusions extending in a left-right direction while being spaced apart from each other in the front-rear direction; and a plurality of second protrusions extending in the front-rear direction while being spaced apart from each other in the left-right direction, wherein the second protrusions are connected to the plurality of first protrusions while intersecting the plurality of first protrusions. The anti-slip protrusion may exhibit a lattice shape. A plurality of first protrusions may exhibit a wave-like shape extending in the left-right direction. A plurality of second protrusions may exhibit a wave-like shape extending in the front-rear direction.

A material of the skin layer may be synthetic resin. A material of the skin layer may be polyvinyl chloride.

The skin layer may include a front-side portion that is inclined relative to a horizontal plane so as to extend forward and upward from a certain position of the skin layer in the front-rear direction, and a rear-side portion that is inclined relative to a horizontal plane so as to extend rearward and upward from a rear end of the front-side portion. The front-side portion and the rear-side portion may be continuous with no steps in the front-rear direction.

Thus, the rider can easily shift weight from the rear-side portion to the front-side portion of the seat. As described above, the anti-slip protrusion reduces slipping of the rider in the rearward direction when the vehicle accelerates.

A straddled vehicle disclosed herein is a vehicle having the straddled vehicle seat as described above.

The straddled vehicle may include a vehicle body frame including a head pipe, a main frame extending rearward and downward from the head pipe, and a seat frame extending rearward and upward from the main frame and supporting the straddled vehicle seat. The straddled vehicle may include: a swing arm pivotally supported on the main frame by a pivot shaft; and a rear wheel supported by the swing arm. At least a part of the front-side portion of the skin layer may be arranged forward relative to the pivot shaft; and at least a part of the rear-side portion of the skin layer is arranged rearward relative to the pivot shaft.

According to the present invention, it is possible, with straddled vehicles, to achieve both ease of weight shift of the rider in the forward direction and reduction of slipping of the rider in the rearward direction when the vehicle accelerates.

### Brief description of the drawings

Fig. 1 is a left side view of a motorcycle according to one embodiment.
Fig. 2 is a left side view of the vehicle body frame.
Fig. 3 is a plan view of the seat.
Fig. 4 is a left side view of the seat.
Fig. 5 is a vertical cross-sectional view of the seat.
Fig. 6 is an enlarged plan view of the skin layer of the seat.
Fig. 7 is a cross-sectional view taken along line VII-VII of Fig. 6.
Fig. 8(a) is a schematic diagram showing an object slipping rearward on the skin layer, and Fig. 8(b) is a schematic diagram showing an object slipping forward on the skin layer.
Fig. 9 is an enlarged plan view of the skin layer of the seat according to another embodiment.
Fig. 10 is an enlarged plan view of the skin layer of the seat according to another embodiment.
Fig. 11 is an enlarged plan view of the skin layer of the seat according to another embodiment.
Fig. 12 is a vertical cross-sectional view of the skin layer of the seat according to another embodiment.
Fig. 13 is a vertical cross-sectional view of the skin layer of the seat according to another embodiment.
Fig. 14 is a plan view of the seat according to another embodiment.

### Embodiments of the invention

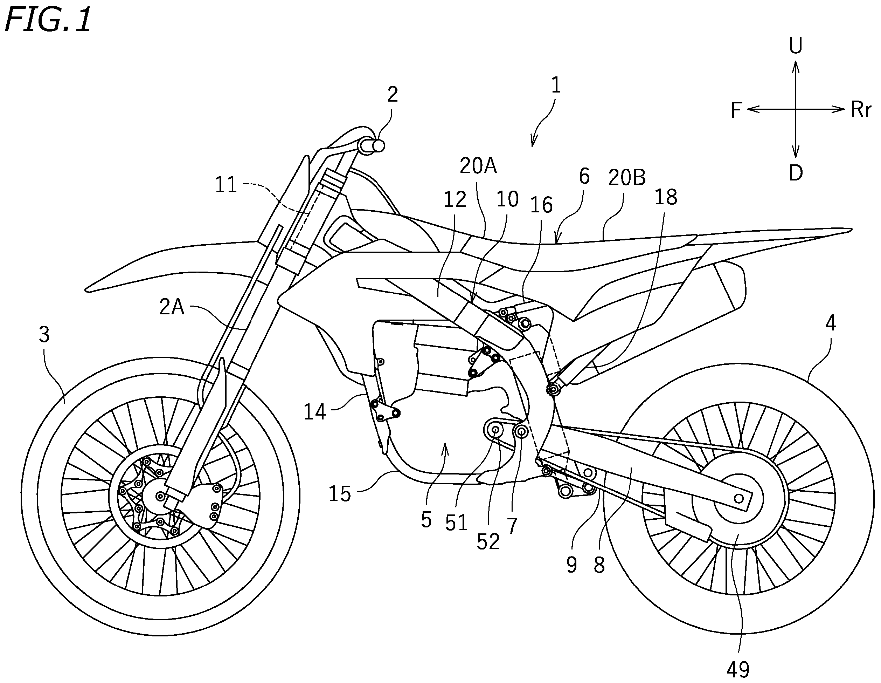

An embodiment of a straddled vehicle will now be described with reference to the drawings. As shown in Fig. 1, the embodiment of the straddled vehicle described below is an off-road motorcycle 1. The motorcycle 1 is a so-called motocrosser.

The terms front, rear, left, right, up and down, as used in the description below, refer to these directions as seen from a virtual rider seated on a seat 6 while the motorcycle 1 is standing upright on a horizontal surface with no rider and no load thereon, unless specified otherwise. The designations F, Rr, L, R, U and D, as used in the figures, refer to front, rear, left, right, up and down, respectively.

As shown in Fig. 1, the motorcycle 1 includes a vehicle body frame 10, a handle 2, a front wheel 3, a rear wheel 4, the seat 6 supported by the vehicle body frame 10, an internal combustion engine (hereinafter referred to as the engine) 5 supported by the vehicle body frame 10, and a swing arm 8.

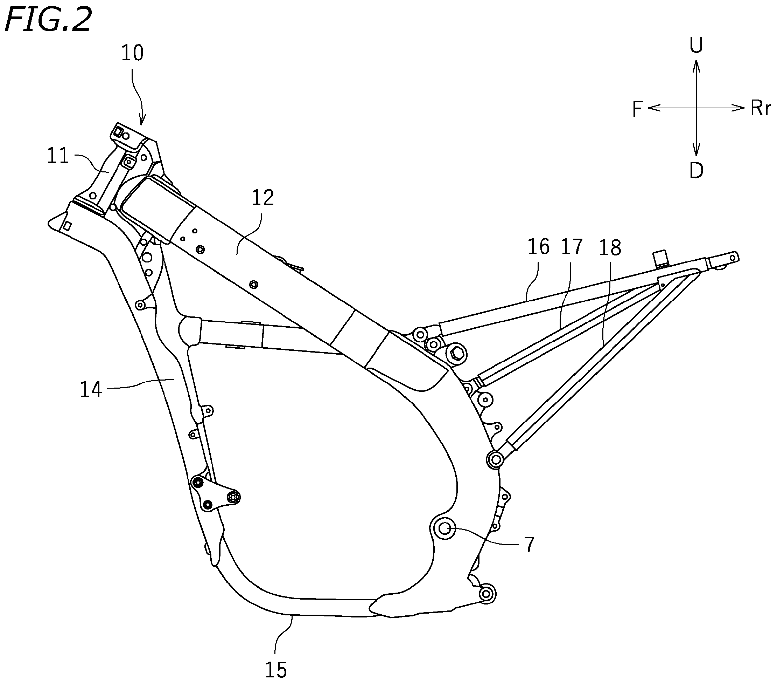

As shown in Fig. 2, the vehicle body frame 10 comprises a head pipe 11, a main frame 12, a down frame 14, a lower frame 15, and seat frames 16, 17, 18. The main frame 12 extends rearward and downward from the head pipe 11. The down frame 14 extends rearward and downward from the head pipe 11, and is arranged downward relative to the main frame 12. The lower frame 15 extends rearward. The front end portion of the lower frame 15 is connected to the lower end portion of the down frame 14, and the rear end portion of the lower frame 15 is connected to the lower end portion of the main frame 12. The seat frames 16, 17, 18 extend rearward and upward. The front end portions of the seat frames 16, 17, and 18 are fastened to the main frame 12. The seat frame 16 is arranged upward relative to the seat frame 17, and the seat frame 17 is arranged upward relative to the seat frame 18. The seat frame 18 is a seat frame that is arranged most downward among the plurality of seat frames. The rear end portions of the seat frames 17 and 18 are connected to the rear portion of the seat frame 16.

A steering shaft (not shown) is inserted into the head pipe 11. The steering shaft is supported by the head pipe 11 so that the steering shaft can rotate left and right. As shown in Fig. 1, the handle 2 is connected to the upper portion of the steering shaft and is arranged upward of the head pipe 11. The lower portion of the steering shaft is connected to a front fork 2A. The front wheel 3 is rotatably connected to the lower end portion of the front fork 2A.

A pivot shaft 7 is connected to the main frame 12. The pivot shaft 7 connects the front end portion of the swing arm 8 to the main frame 12. The swing arm 8 is connected by the pivot shaft 7 so that the swing arm 8 can pivot up and down relative to the main frame 12. The rear wheel 4 is rotatably connected to the rear end portion of the swing arm 8.

The engine 5 is an example of a drive source that outputs the driving force for travelling. The engine 5 has an output shaft 51 that outputs the driving force. A sprocket 52 is fixed to the output shaft 51. The rear wheel 4 is linked to the engine 5 via a chain 9. Specifically, the rear wheel 4 includes a sprocket 49, and an endless chain 9 is wound around the sprocket 49 of the rear wheel 4 and the sprocket 52 of the engine 5. The driving force of the engine 5 is transmitted to the rear wheel 4 via the chain 9.

The seat 6 of the present embodiment is formed relatively flat in the front-rear direction. The seat 6 is formed relatively flat as the vehicle is seen from the side. Next, the details of the seat 6 will be described.

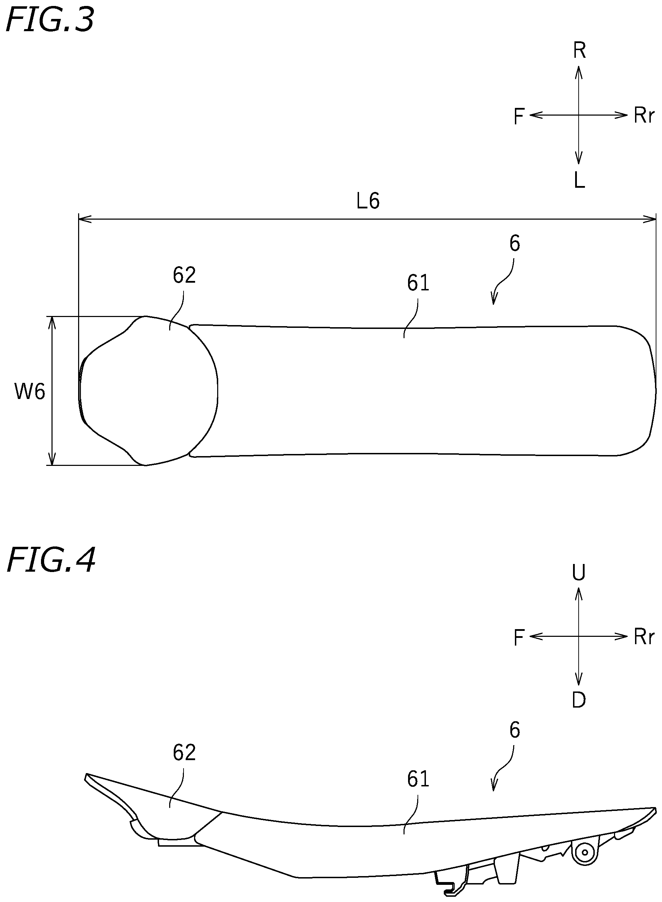

Fig. 3 is a plan view of the seat 6. Fig. 4 is a left side view of the seat 6. The seat 6 of the present embodiment includes a main seat 61 and a sub-seat 62. The sub-seat 62 is arranged forward of the main seat 61. Note however that the seat 6 does not need to include the sub-seat 62, and may be composed only of the main seat 61. That is, the seat 6 does not need to include a plurality of seats, and may be composed of a single seat.

As shown in Fig. 3, the dimension L6 of the seat 6 in the front-rear direction (hereinafter also referred to as the seat length) is larger than the dimension W6 thereof in the left-right direction (hereinafter also referred to as the seat width). Although there is no particular limitation, the seat length L6 of the seat 6 according to the present embodiment is significantly longer than the seat width W6. The seat length L6 may be three times or more the seat width W6, may be 3.5 times or more the seat width W6, or may be four times or more the seat width W6.

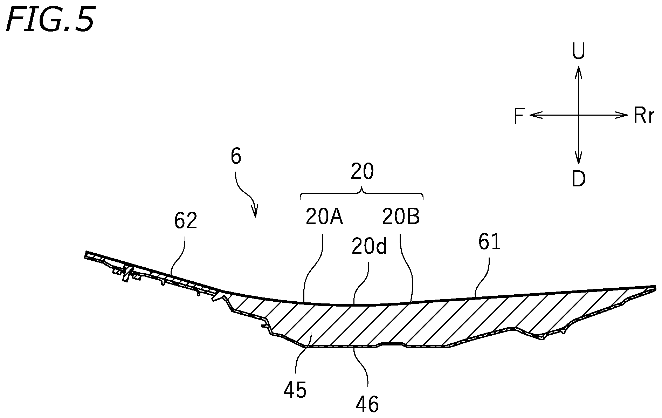

Fig. 5 is a vertical cross-sectional view of the seat 6. As shown in Fig. 5, the seat 6 includes a skin layer 20, a cushion layer 45 arranged on the back side of the skin layer 20, and a bottom layer 46 arranged downward of the cushion layer 45. The skin layer 20 covers the upper side, the left side, and the right side of the cushion layer 45. The skin layer 20 is formed by a synthetic resin sheet, for example. In the present embodiment, the skin layer 20 is formed from polyvinyl chloride (PVC). The cushion layer 45 is formed from rubber or elastomer, for example. In the present embodiment, the cushion layer 45 of the main seat 61 is formed by a polyurethane cushion, and the cushion layer 45 of the sub-seat 62 is formed by a rubber cushion. The bottom layer 46 is formed by a plastic plate material, for example. Note however that the above materials are examples, and there is no particular limitation on the materials of the skin layer 20, the cushion layer 45, and the bottom layer 46.

The skin layer 20 includes a front-side portion 20A extending forward and upward, and a rear-side portion 20B extending rearward and upward from a rear end 20d of the front-side portion 20A. The front-side portion 20A and the rear-side portion 20B are inclined relative to a horizontal plane. As shown in Fig. 1, at least a part of the front-side portion 20A is arranged forward relative to the pivot shaft 7. At least a part of the rear-side portion 20B is arranged rearward relative to the pivot shaft 7. As shown in Fig. 5, the front-side portion 20A and the rear-side portion 20B are continuous with no steps in the front-rear direction. The front-side portion 20A and the rear-side portion 20B are smoothly continuous in the front-rear direction. Therefore, the rider sitting on the seat 6 can easily move from the rear-side portion 20B to the front-side portion 20A, and can easily move from the front-side portion 20A to the rear-side portion 20B.

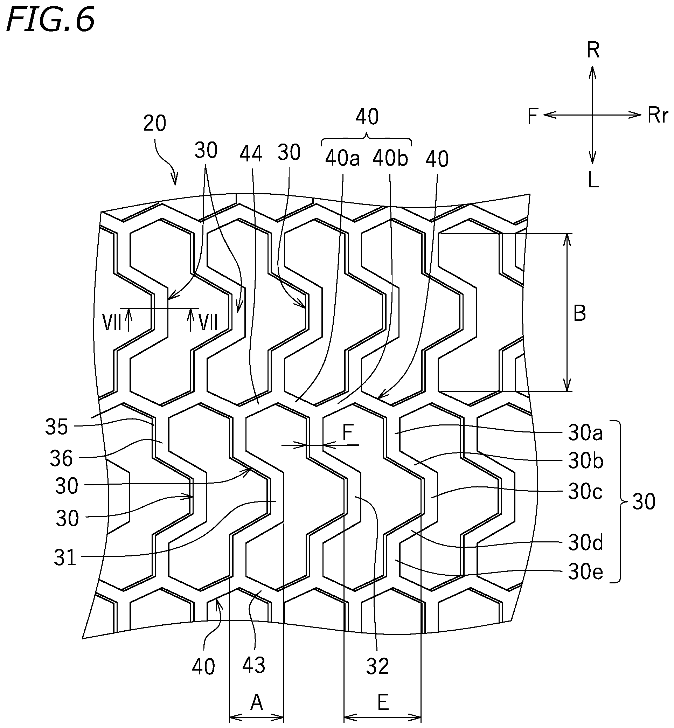

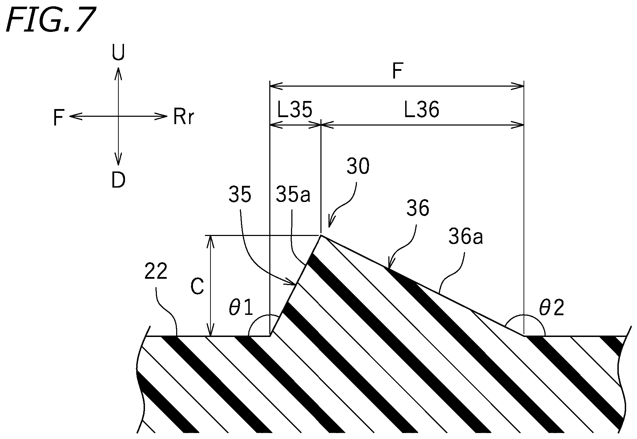

Fig. 6 is a plan view showing, on an enlarged scale, the surface of the skin layer 20. Fig. 7 is a vertical cross-sectional view of the skin layer 20 taken along the front-rear direction, and is a cross-sectional view taken along line VII-VII of Fig. 6. The skin layer 20 has an outer surface formed with protrusions and depressions over (along) the front-rear direction. As shown in Fig. 6, the skin layer 20 has a base surface 22 and anti-slip protrusions 30, 40. The anti-slip protrusions 30, 40 protrude upward from the base surface 22 (see Fig. 7). The anti-slip protrusions 30 and the anti-slip protrusions 40 are continuous with each other, forming mesh-like anti-slip protrusions as a whole. The anti-slip protrusions 30, 40 exhibit a lattice shape.

As shown in Fig. 6, the anti-slip protrusions 30 include a plurality of first protrusions 31, 32 extending in the left-right direction while being spaced apart from each other in the front-rear direction. The anti-slip protrusions 40 include a plurality of second protrusions 43, 44 extending in the front-rear direction while being spaced apart from each other in the left-right direction. The second protrusions 43, 44 are continuous with the first protrusions 31, 32, and connect the first protrusions 31 and the first protrusions 32. The second protrusions 43, 44 intersect the first protrusions 31, 32. Specifically, the front end portion of the second protrusion 43 is continuous with the left end portion of the first protrusion 31. The rear end portion of the second protrusion 43 is continuous with the left end portion of the first protrusion 32. The second protrusion 43 connects the left end portion of the first protrusion 31 and the left end portion of the first protrusion 32. The front end portion of the second protrusion 44 is continuous with the right end portion of the first protrusion 31. The rear end portion of the second protrusion 44 is continuous with the right end portion of the first protrusion 32. The second protrusion 44 connects the right end portion of the first protrusion 31 and the right end portion of the first protrusion 32.

The anti-slip protrusions 30 extend in a wave-like pattern in the left-right direction. The first protrusions 31, 32 exhibit a wave-like shape extending in the left-right direction. Here, the anti-slip protrusion 30 includes a central portion 30c extending straight in the left-right direction, a right inclined portion 30b extending straight forward and rightward from the right end of the central portion 30c, a right end portion 30a extending straight rightward from the right end of the right inclined portion 30b, a left inclined portion 30d extending straight forward and leftward from the left end of the central portion 30c, and a left end portion 30e extending straight leftward from the left end of the left inclined portion 30d. The right end portion 30a, the right inclined portion 30b, the central portion 30c, the left inclined portion 30d, and the left end portion 30e are continuous.

The anti-slip protrusions 40 extend in a wave-like pattern in the front-rear direction. The second protrusions 43, 44 exhibit a wave-like shape extending in the front-rear direction. Here, the anti-slip protrusion 40 includes a front portion 40a extending forward and rightward, and a rear portion 40b extending rearward and rightward. The rear end portion of the front portion 40a and the front end portion of the rear portion 40b are continuous. The front portion 40a and the rear portion 40b are connected. Furthermore, the anti-slip protrusions 40 arranged in the front-direction rear are continuous with each other.

As shown in Fig. 7, the anti-slip protrusion 30 has a front surface 35 facing forward and a rear surface 36 facing rearward. Note that the term "forward" as used herein is not limited to the direction extending forward along a horizontal line but includes directions inclined relative to the horizontal line. The term "rearward" as used herein is not limited to the direction extending rearward along a horizontal line but includes directions inclined relative to the horizontal line. In the present embodiment, the front surface 35 has a first surface 35a formed by a inclined surface extending forward and downward. The first surface 35a is an inclined surface that is inclined relative to the perpendicular plane (here, the vertical plane) perpendicular to the base surface 22, and is an inclined surface that slopes from its apex to the base surface 22. The rear surface 36 has a second surface 36a formed by an inclined surface extending rearward and downward. The second surface 36a is an inclined surface that is inclined relative to the perpendicular plane, and is an inclined surface that slopes from the apex of the first surface 35a to the base surface 22. Here, the first surface 35a and a second surface 36a are flat surfaces. Note however that the inclined surfaces are not limited to flat surfaces but may be curved surfaces. The first surface 35a is not limited to an inclined surface that extends forward and downward but may be a perpendicular surface that extends perpendicular to the base surface 22. Note that the term perpendicular surface as used herein is not limited to a flat surface but may be a curved surface. In the present embodiment, the front surface 35 is composed only of the first surface 35a, and the rear surface 36 is composed only of the second surface 36a. The second surface 36a is continuous with the first surface 35a.

As shown in Fig. 7, in a predetermined vertical cross section of the anti-slip protrusion 30 along the front-rear direction, the angle formed between the front surface 35 and the base surface 22 (hereinafter referred to as the front surface angle) is denoted as θ1, and the angle formed between the rear surface 36 and the base surface 22 (hereinafter referred to as the rear surface angle) is denoted as θ2. For the seat 6, the front surface angle θ1 is smaller than the rear surface angle θ2. The front face 35 has a steeper inclination than the rear face 36. Note that where the front face 35 is a curved surface, the angle formed between the front face 35 and the base surface 22 varies depending on the local position on the front face 35. Therefore, to ensure applicability whether the front surface 35 is a flat surface or a curved surface, the front surface angle θ1 refers to the average angle formed between the front surface 35 and the base surface 22. This similarly applies also to the rear surface 36, and the rear surface angle θ2 refers to the average angle formed between the rear surface 36 and the base surface 22.

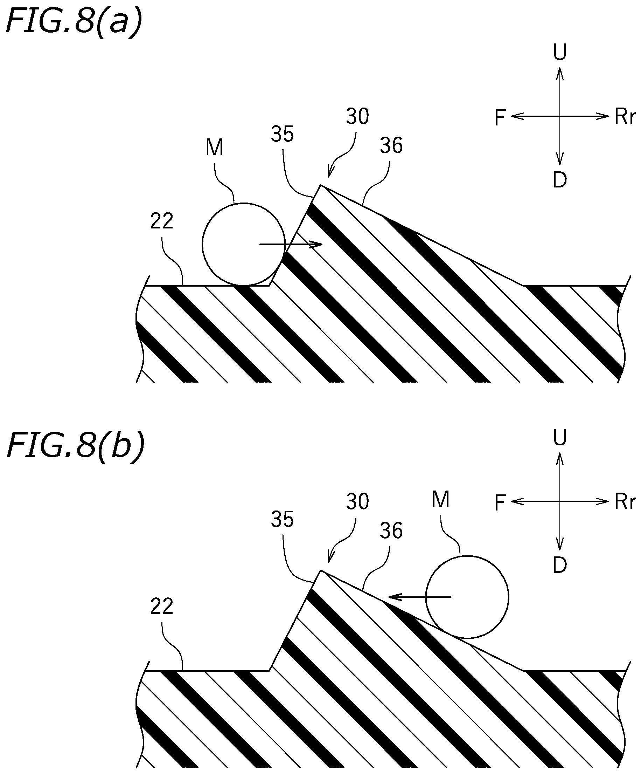

Since the front surface 35 has a steeper inclination than the rear surface 36, as schematically shown in Fig. 8(a) and Fig. 8(b), an object M receives a greater resistance from the anti-slip protrusions 30 when the object M slips rearward on the skin layer 20 compared to when the object M slips forward on the skin layer 20. Therefore, the object M on the skin layer 20 less easily slips when moving rearward than when moving forward. In the present embodiment, the static friction coefficient of the skin layer 20 in the rearward direction is greater than the static friction coefficient of the skin layer 20 in the forward direction. Although there is no particular limitation on the value of the static friction coefficient, in the present embodiment, the static friction coefficient of the skin layer 20 in the rearward direction is 0.9 or greater and less than 1.0, and the static friction coefficient of the skin layer 20 in the forward direction is 0.8 or greater and less than 0.9. The static friction coefficient of the skin layer 20 in the rearward direction may be 0.90 or greater and less than 0.95. The static friction coefficient of the skin layer 20 in the forward direction may be 0.85 or greater and less than 0.90. Furthermore, since the anti-slip protrusions 30 extend in the left-right direction (see Fig. 6), the static friction coefficient of the skin layer 20 in the left-right direction is relatively small. Therefore, the static friction coefficient of the skin layer 20 in the rearward direction is greater than the static friction coefficient of the skin layer 20 in the leftward direction and greater than the static friction coefficient of the skin layer 20 in the rightward direction. Although there is no particular limitation, in the present embodiment, the static friction coefficient of the skin layer 20 in the leftward direction and the rightward direction is less than 0.9.

Thus, since the static friction coefficient of the skin layer 20 in the rearward direction is relatively large, the rider seated on the seat 6 less easily slips rearward. Therefore, while the rider receives an inertial force during acceleration of the motorcycle 1, the rider less easily slips rearward. On the other hand, since the static friction coefficients of the skin layer 20 are relatively small in the forward direction, the leftward direction, and the rightward direction, the rider can easily move forward, leftward, and rightward on the seat 6. Therefore, the rider can easily shift weight forward, leftward, and rightward.

While there is no particular limitation on the value of the front surface angle θ1, the front surface angle θ1 is preferably 90 degrees or more and less than 135 degrees, and particularly preferably 90 degrees or more and less than 115 degrees, in order to reduce slipping of the rider in the rearward direction. While there is also no particular limitation on the rear surface angle θ2, the rear surface angle θ2 is preferably 135 degrees or more, and particularly preferably 140 degrees or more and less than 160 degrees, in order to achieve ease of weight shift of the rider in the forward direction. While there is no particular limitation on the dimensions of the front surface 35 and the rear surface 36 in the front-rear direction, the dimension L35 of the front surface 35 in the front-rear direction is 0.05 to 0.25 times the dimension L36 of the rear surface 36 in the front-rear direction, for example.

In order to achieve ease of weight shift of the rider in the forward direction while reducing slipping in the rearward direction, the anti-slip protrusions 30 are relatively small and densely arranged. In the present embodiment, the dimension A (see Fig. 6) of the wave-shaped anti-slip protrusions 30 in the front-rear direction is set to 2 to 4 mm. The dimension B of the anti-slip protrusions 30 in the left-right direction is set to 10 to 15 mm. The height C (see Fig. 7) of the anti-slip protrusions 30 is set to 0.3 to 0.5 mm. The pitch E (see Fig. 6) of the anti-slip protrusions 30 in the front-rear direction is set to 4 to 6 mm. The width F of the anti-slip protrusions 30 in the front-rear direction is set to 0.5 to 1.5 mm. Note that F = L35 + L36 (see Fig. 7). Note that the numerical ranges of these parameters A, B, C, E, and F are examples, and there is no particular limitation. Furthermore, the values of the parameters A, B, C, E, and F do not need to be constant, and may vary depending on the location on the skin layer 20.

As described above, the skin layer 20 is formed from polyvinyl chloride (PVC). While there is no limitation on the method for forming the anti-slip protrusions 30 and the anti-slip protrusions 40, the anti-slip protrusions 30 and the anti-slip protrusions 40 are formed by an embossing process in the present embodiment.

The seat 6 is configured as described above. The motorcycle 1 is a vehicle in which the rider straddles the seat 6. While the motorcycle 1 is travelling, the rider sometimes shifts weight by sliding on the seat 6. Specifically, the motorcycle 1 according to the present embodiment is an off-road type motorcycle suitable for riding on uneven terrain, and is a motocrosser. It is anticipated that the rider will frequently shift weight in response to irregularities and slopes of the road surface. It is preferable that the seat 6 be configured so that the rider can easily shift weight.

As shown in Fig. 1 and Fig. 4, the seat 6 is formed relatively flat in the front-rear direction. The seat 6 is shaped so that the rider can easily shift weight in the front-rear direction. On the other hand, when the motorcycle 1 accelerates, the rider receives an inertial force. It is preferable that the seat 6 is configured to suppress slipping of the rider in the rearward direction so as to prevent the rider from slipping rearward when the motorcycle 1 abruptly accelerates.

As described above, according to the present embodiment, the skin layer 20 of the seat 6 includes the anti-slip protrusions 30 (see Fig. 6). The front surface angle θ1 of the anti-slip protrusion 30 is smaller than the rear surface angle θ2, and the front surface 35 is a steeper slope than the rear surface 36 (see Fig. 7). When the motorcycle 1 accelerates, the movement of the rider in the rearward direction is suppressed by the front surfaces 35 of the anti-slip protrusions 30 (see Fig. 8(a)). Therefore, it is possible to reduce slipping of the rider in the rearward direction during acceleration. On the other hand, since the rear surface 36 is a gentler slope than the front surface 35, the rear surface 36 less impedes the movement of the rider in the forward direction. Therefore, the rider can easily shift weight in the forward direction (see Fig. 8(b)). Therefore, according to the present embodiment, it is possible to suppress slipping of the rider in the rearward direction when the motorcycle 1 accelerates while ensuring ease of weight shift of the rider in the forward direction.

According to the present embodiment, the front surface angle θ1 is 90 degrees or more and less than 135 degrees. The rear surface angle θ2 is 135 degrees or more. According to the present embodiment, it is possible to desirably achieve both ease of weight shift of the rider in the forward direction and reduction of slipping in the rearward direction during acceleration.

According to the present embodiment, the static friction coefficient of the skin layer 20 of the seat 6 in the rearward direction is greater than any of the static friction coefficient in the forward direction, the static friction coefficient in the leftward direction, and the static friction coefficient in the rightward direction. Therefore, it is possible to suppress slipping of the rider in the rearward direction during acceleration while ensuring ease of weight shift of the rider in the forward direction, the leftward direction, and the rightward direction.

According to the present embodiment, the skin layer 20 of the seat 6 includes the front-side portion 20A extending forward and upward, and the rear-side portion 20B extending rearward and upward from the rear end 20d of the front-side portion 20A, and is continuous with no steps in the front-rear direction. The skin layer 20 is formed relatively flat in the front-rear direction. Therefore, the rider can easily shift weight from the rear-side portion 20B to the front-side portion 20A. Note that the slipping of the rider in the rearward direction during acceleration is suppressed by the front surfaces 35 of the anti-slip protrusions 30 as described above.

The motorcycle 1 according to the present embodiment is a motocrosser, and the seat 6 has a relatively large dimension in the front-rear direction. Motocrossers are vehicles where the rider frequently shifts weight in the front-rear direction while riding. Therefore, the effects described above are pronounced.

While one embodiment of a straddled vehicle and a straddled vehicle seat has been described above, the embodiment described above is merely illustrative, and various other embodiments are possible. Next, examples of other embodiments will be described.

As shown in Fig. 6, in the embodiment described above, the anti-slip protrusions 30, 40 of the skin layer 20 of the seat 6 are formed in a mesh-like pattern as a whole. However, the overall shape of the anti-slip protrusions of the skin layer 20 is not limited to a mesh-like pattern. For example, some or all of the anti-slip protrusions 40 may be omitted. The skin layer 20 may only include the anti-slip protrusions 30 extending in the left-right direction.

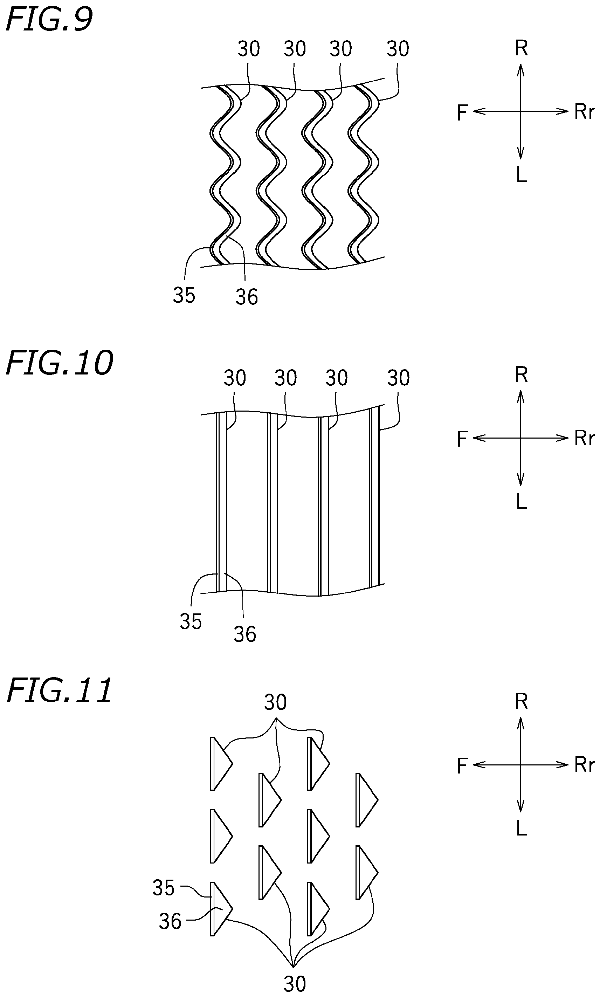

In the embodiment described above, the anti-slip protrusions 30 extend while being bent in the left-right direction into a wave-like pattern (see Fig. 6). However, the wave-like pattern of the anti-slip protrusions 30 is not limited to the pattern shown in Fig. 6. For example, as shown in Fig. 9, the anti-slip protrusions 30 may extend while being curved in the left-right direction into a wave-like pattern. The skin layer 20 may include anti-slip protrusions extending in the front-rear direction (see the anti-slip protrusions 40 in Fig. 6) in addition to the anti-slip protrusions 30 shown in Fig. 9, or may include no anti-slip protrusions extending in the front-rear direction. Note that the anti-slip protrusions 30 shown in Fig. 9 also have the front surface 35 and the rear surface 36 described above shown in Fig. 7.

The anti-slip protrusions 30 do not need to extend in a wave-like pattern in the left-right direction. As shown in Fig. 10, the anti-slip protrusions 30 may extend straight in the left-right direction. The skin layer 20 may include anti-slip protrusions extending in the front-rear direction, in addition to the anti-slip protrusion 30 shown in Fig. 10, or may include no anti-slip protrusions extending in the front-rear direction. The anti-slip protrusion 30 shown in Fig. 10 also has the front surface 35 and the rear surface 36 described above shown in Fig. 7.

As shown in Fig. 11, the anti-slip protrusions 30 may be a plurality of protrusions separated from each other. The shape of the anti-slip protrusion 30 as viewed from above is not limited to a strip shape. For example, as shown in Fig. 11, the shape of the anti-slip protrusion 30 as viewed from above may be a triangular shape.

As shown in Fig. 7, in a vertical cross section of the anti-slip protrusion 30 extending in the front-rear direction, the front surface angle θ1 is smaller than the rear surface angle θ2. θ1 < θ2 may hold true only for a part of the anti-slip protrusion 30 (e.g., more than half of the anti-slip protrusion 30 in the left-right direction), and θ1<θ2 may hold true in any vertical cross section.

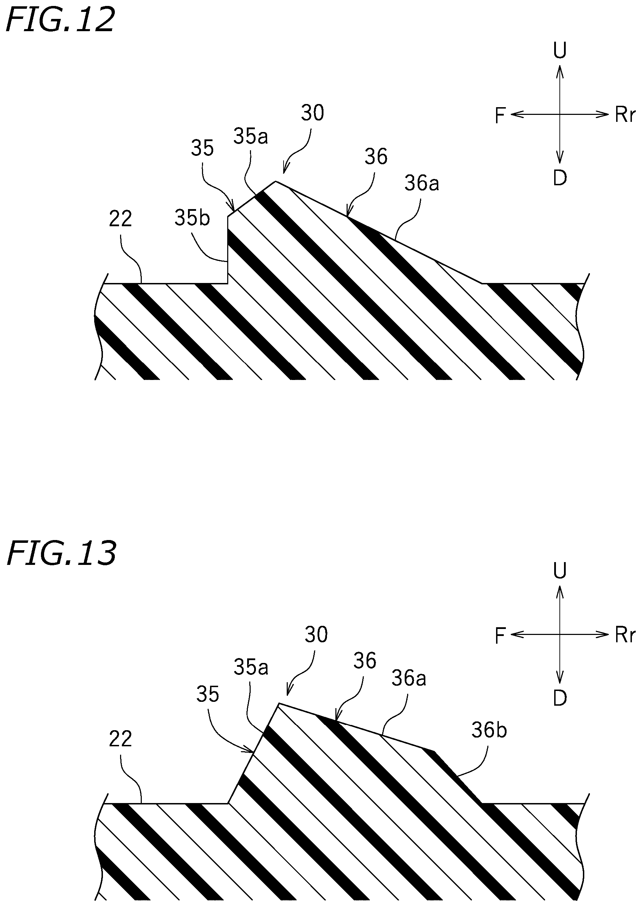

In the embodiment described above, the front surface 35 is composed only of the first surface 35a, and the rear surface 36 is composed only of the second surface 36a (see Fig. 7). However, the front surface 35 may include, in addition to the first surface 35a, another surface with a different angle relative to the base surface 22. The rear surface 36 may include, in addition to the second surface 36a, another surface with a different angle relative to the base surface 22. For example, as shown in Fig. 12, the front surface 35 may include the first surface 35a and a third surface 35b with different angles relative to the base surface 22. For example, as shown in Fig. 13, the rear surface 36 may include the second surface 36a and a fourth surface 36b with different angles relative to the base surface 22. Note that when the front surface 35 includes a plurality of surfaces, the average angle θ1 formed between the front surface 35 and the base surface 22 refers to the average of the angles formed by these surfaces relative to the base surface 22. Similarly, when the rear surface 36 includes a plurality of surfaces, the average angle θ2 formed between the rear surface 36 and the base surface 22 is the average of the angles formed by these surfaces relative to the base surface 22.

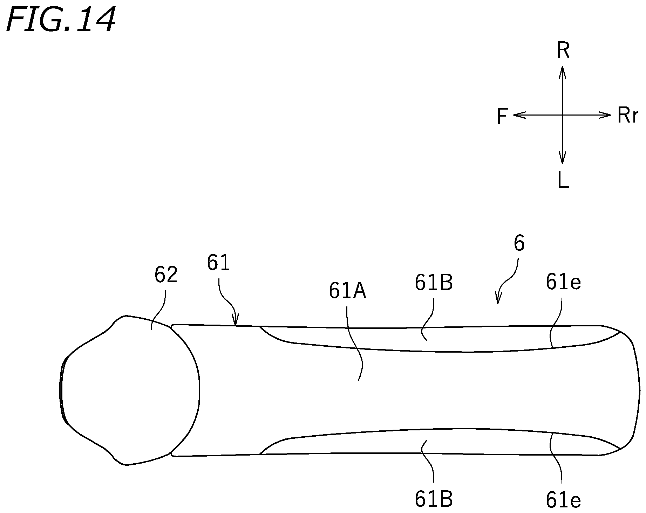

The skin layer 20 may be formed from a single material or from a plurality of materials. While the seat upper surface portion and the seat side surface portion of the main seat 61 are integrated together in the embodiment described above, as shown in Fig. 14, for example, the skin layer 20 of a seat upper surface portion 61 and the skin layer 20 of a seat side surface portion 61B may be formed from different materials and connected together. Note that reference numeral 61e in the figure denotes the boundary line between the skin layer 20 of the seat upper surface portion 61 and the skin layer 20 of the seat side surface portion 61B. The seat upper surface portion 61 and the seat side surface portion 61B are connected in an R-shaped or an inclined shape. In the embodiment described above and a variation shown in Fig. 14, the anti-slip portions 30, 40 may be provided on both the skin layer 20 of the seat upper surface portion 61 and the skin layer 20 of the seat side surface portion 61B, or may be provided only on the skin layer 20 of the seat upper surface portion 61. Note that in the skin layer 20 of the seat side surface portion 61B, the anti-slip protrusions 30, 40 protrude sideward from the base surface 22.

The shape of the anti-slip protrusions 30, 40 of the skin layer 20 do not need to be identical across all locations of the skin layer 20, and may differ at different locations on the skin layer 20. The skin layer 20 may include a plurality of anti-slip protrusions 30, 40 having different shapes.

The materials described above of the skin layer 20, the cushion layer 45, and the bottom layer 46 of the seat 6 are merely examples, and there is no particular limitation on these materials.

The driving source for the straddled vehicle is not limited to an internal combustion engine, but may also be an electric motor.

The type of the motorcycle 1 is not limited to an off-road type. A straddled vehicle is a vehicle that is straddled by the rider. A straddled vehicle is not limited to the motorcycle 1. For example, a straddled vehicle may be a motor tricycle, an ATV (All Terrain Vehicle), a snowmobile, or a personal watercraft.

### Description of the reference signs

1: Motorcycle (straddled vehicle), 4: Rear wheel, 6: Seat (straddled vehicle seat), 7: Pivot shaft, 8: Swing arm, 10: Vehicle body frame, 11: Head pipe, 12: Main frame, 16 to 18: Seat frame, 20: Skin layer, 20A: Front-side portion, 20B: Rear-side portion, 22: Base surface, 30: Anti-slip protrusion, 31: First protrusion, 32: First protrusion, 35: Front surface, 36: Rear surface, 40: Anti-slip protrusion, 43: Second protrusion, 44: Second protrusion, 45: Cushion layer

## Claims

1. A straddled vehicle seat (6) provided on a straddled vehicle (1), comprising a skin layer (20) and a cushion layer (45) arranged on a back side of the skin layer (20), wherein:
the skin layer (20) includes a base surface (22), and an anti-slip protrusion (30) that is formed on the base surface (22) so as to extend along a front-rear direction and that is protruding upward from the base surface (22);
the anti-slip protrusion (30) includes a front surface (35) including a perpendicular surface that is perpendicular to the base surface (22) or an inclined surface that is inclined relative to the perpendicular surface so as to extend forward and downward, and a rear surface (36) located rearward relative to the front surface (35) and including an inclined surface that is inclined relative to the perpendicular surface so as to extend rearward and downward; and
in a predetermined vertical cross section of the anti-slip protrusion (30) along the front-rear direction, an average angle (θ1) formed between the front surface (35) and the base surface (22) is smaller than an average angle (θ2) formed between the rear surface (36) and the base surface (22).

2. The straddled vehicle seat (6) according to claim 1, wherein:
the average angle (θ1) formed between the front surface (35) and the base surface (22) is 90 degrees or more and less than 135 degrees; and
the average angle (θ2) formed between the rear surface (36) and the base surface (22) is 135 degrees or more.

3. The straddled vehicle seat (6) according to claim 1 or 2, wherein a static friction coefficient of the skin layer (20) in a rearward direction is greater than any of a static friction coefficient of the skin layer (20) in a forward direction, a static friction coefficient of the skin layer (20) in a leftward direction, and a static friction coefficient of the skin layer (20) in a rightward direction.

4. The straddled vehicle seat (6) according to any one of claims 1 to 3, wherein:
the front surface (35) is composed only of the inclined surface that slopes from an apex of the front surface (35) to the base surface (22); and
the rear surface (36) is continuous with the apex of the front surface (35) and composed of the inclined surface that slopes from the apex of the front surface (35) to the base surface (22).

5. The straddled vehicle seat (6) according to any one of claims 1 to 4, wherein a dimension of the front surface (35) in the front-rear direction is 0.05 to 0.25 times a dimension of the rear surface (36) in the front-rear direction.

6. The straddled vehicle seat (6) according to any one of claims 1 to 5, wherein in any vertical cross section of the anti-slip protrusion (30) along the front-rear direction, the average angle (θ1) formed between the front surface (35) and the base surface (22) is smaller than the average angle (θ2) formed between the rear surface (36) and the base surface (22).

7. The straddled vehicle seat (6) according to any one of claims 1 to 6, wherein:
the skin layer (20) includes an upper surface portion (61A) on which the anti-slip protrusion (30) protruding upward from the base surface (22) is provided, and a side surface portion (61B) that is located sideward of the upper surface portion;
the anti-slip protrusion (30) is formed extending from the upper surface portion (61A) to the side surface portion (61B); and/or
another anti-slip protrusion (30) protruding sideward from the base surface (22) is provided on the side surface portion (61B); and/or
the anti-slip protrusion (30) exhibits a wave-like shape extending from the upper surface portion (61A) to the side surface portion (61B).

8. The straddled vehicle seat (6) according to any one of claims 1 to 7, wherein the anti-slip protrusion (30) includes a plurality of protrusions (31, 32) that are spaced apart from each other in the front-rear direction.

9. The straddled vehicle seat (6) according to any one of claims 1 to 8, wherein:
the anti-slip protrusion (30) includes:
a plurality of first protrusions (31) extending in a left-right direction while being spaced apart from each other in the front-rear direction; and
a plurality of second protrusions (32) extending in the front-rear direction while being spaced apart from each other in the left-right direction, wherein the second protrusions (32) are connected to the plurality of first protrusions (31) while intersecting the plurality of first protrusions (31).

10. The straddled vehicle seat (6) according to claim 9, wherein the anti-slip protrusion (30) exhibits a lattice shape.

11. The straddled vehicle seat (6) according to claim 9 or 10, wherein:
a plurality of first protrusions (31) exhibit a wave-like shape extending in the left-right direction; and/or
a plurality of second protrusions (32) exhibit a wave-like shape extending in the front-rear direction.

12. The straddled vehicle seat (6) according to any one of claims 1 to 11, wherein a material of the skin layer (20) is synthetic resin or polyvinyl chloride.

13. The straddled vehicle seat (6) according to any one of claims 1 to 12, wherein:
the skin layer (20) includes a front-side portion (20A) that is inclined relative to a horizontal plane so as to extend forward and upward from a certain position of the skin layer (20) in the front-rear direction, and a rear-side portion (20B) that is inclined relative to a horizontal plane so as to extend rearward and upward from a rear end (20d) of the front-side portion (20A); and
the front-side portion (20A) and the rear-side portion (20B) are continuous with no steps in the front-rear direction.

14. A straddled vehicle (1) comprising the straddled vehicle seat (6) according to any one of claims 1 to 13.

15. A straddled vehicle (1) comprising:
the straddled vehicle seat (6) according to claim 13;
a vehicle body frame (10) including a head pipe (11), a main frame (12) extending rearward and downward from the head pipe (11), and a seat frame (16, 17, 18) extending rearward and upward from the main frame (12) and supporting the straddled vehicle seat (6);
a swing arm (8) pivotally supported on the main frame (12) by a pivot shaft (7); and
a rear wheel (4) supported by the swing arm (8), wherein:
at least a part of the front-side portion (20A) of the skin layer (20) is arranged forward relative to the pivot shaft (7); and
at least a part of the rear-side portion (20B) of the skin layer (20) is arranged rearward relative to the pivot shaft (7).
